# EUROPÄISCHE PATENTSCHRIFT

(11) **EP 2 200 949 B1**
(45) Veröffentlichungstag und Bekanntmachung des Hinweises auf die Patenterteilung: **10.02.2016**
(21) Anmeldenummer: 08801702.5
(22) Anmeldetag: 26.08.2008
(51) Int. Cl.: C04B 14/06, C04B 111/72, C04B 26/32

(54) **VERWENDUNG EINER STOFFMISCHUNG ALS BINDEMITTEL ZUR HERSTELLUNG EINES MÖRTELS**
USE OF A SUBSTANCE MIXTURE AS A BINDING AGENT FOR PRODUCING MORTAR
L'USAGE D'UN MÉLANGE DE SUBSTANCES UTILISÉ COMME LIANT POUR LA PRODUCTION D'UN MORTIER

(30) Priorität: 31.08.2007 DE 102007041487
(43) Veröffentlichungstag der Anmeldung: 30.06.2010
(73) Patentinhaber: Heimdall Holding GmbH, 40499 Erkrath (DE)
(72) Erfinder: IBACH, Hermann, Wolf, 96110 Schesslitz (DE)
(74) Vertreter: Von Rohr Patentanwälte Partnerschaft mbB
(86) Internationale Anmeldenummer: PCT/EP2008/006971
(87) Internationale Veröffentlichungsnummer: WO 2009/030400

(56) Entgegenhaltungen:
- EP-A- 0 846 717
- EP-A- 1 201 703
- WO-A-2009/003594
- DE-A1- 2 258 901
- DE-A1- 10 040 406
- DE-A1-102004 036 073
- US-A- 5 051 129
- DATABASE WPI Week 199118 Thomson Scientific, London, GB; AN 1991-129636 XP002515234 & JP 03 069540 A (MITSUBISHI RAYON CO LTD) 25. März 1991 (1991-03-25) & JP 03 069540 A (MITSUBISHI RAYON CO) 25. März 1991 (1991-03-25)
- DATABASE EPODOC EUROPEAN PATENT OFFICE, THE HAGUE, NL; XP002515317 & KR 2003 0074092 A (KOREA INST CONSTRUCTION TECH [KR]) 19. September 2003 (2003-09-19)
- DATABASE EPODOC EUROPEAN PATENT OFFICE, THE HAGUE, NL; XP002515318 & KR 100 381 717 B1 (KOREA CHEMICAL CO LTD) 11. April 2003 (2003-04-11)

## Beschreibung

Die Erfindung betrifft eine Stoffmischung als Bindemittel zur Herstellung eines Mörtels. Unter dem Begriff "Mörtel" ist sowohl ein in kleinen Mengen in der Denkmalpflege zum Einsatz kommender Restauriermörtel als auch ein für großflächiges Verputzen einsetzbarer Mörtel zu verstehen.

In der Denkmalpflege besteht ein Bedarf für vielseitig einsetzbare Restauriermörtel, die sich in ihren Eigenschaften an die vom Restaurator vorgefundenen Verwitterungserscheinungen anpassen lassen. So sollten aus optischen Gründen die Korngrößen der Zuschlagstoffe dem Untergrund und dem Umfeld der Antragungen entsprechen. Wesentlich ist jedoch, daß die physikalischen Eigenschaften wie Wasseraufnahme und Wasserabgabe, thermische und hygrische Dehnung und der E-Modul dem Untergrund entsprechen.

Typische Einsatzbereiche eines Restauriermörtels sind Antragungen (das Anmodellieren) von Fehlstellen an Figuren und Bauzier aus Naturstein aber auch Abgüsse fehlender Extremitäten bis hin zum Abguß von Skulpturen und Bauteilen. Restauriermörtel kommen in unterschiedlich eingestellter Viskosität darüberhinaus zum Hinterfüllen von Abschuppungen und Abschalungen bei verwittertem Naturstein zum Einsatz.

Bei Mörteln mit bekannten Bindemitteln,
- wie dem hydraulisch abreagierenden Bindemittel Zement,
- dem durch Karbonatisierung abbindenden Luftkalk,
- den durch Polymerisation reagierenden organischen Bindemitteln (Acrylharzen, Epoxidharzen, Polyesterharzen),
- dem durch Hydrolyse und Polykondensation reagierendem Bindemittel auf der Basis von Kieselsäureester
sind der individuellen Anpassung engen Grenzen gesetzt.

Die DE 10 2004 036 073 A1 betrifft einen versiegelten Naturwerkstein, dessen Poren für Wasserdampf durchlässig und wässrige Flüssigkeiten aber nicht durchlässig sind, sowie ein Verfahren zu dessen Herstellung und die Verwendung von solchen Naturwerksteinen. Insbesondere beschreibt die DE 10 2004 036 073 A1 einen versiegelten Naturwerkstein auf Basis eines Poren aufweisenden Naturwerksteins, wobei die Poren des Natursteinwerks, die von der Oberfläche des Naturwerksteins zugänglich sind, mit einem Matrixmaterial gefüllt sind. Bei dem Matrixmaterial soll es sich um ein durch Silizium-Sauerstoff-Bindungen gebildetes Netzwerk handeln, wobei die im Netzwerk vorhandenen Siliziumatome zumindest teilweise über Kohlenstoffatome an das Silizium gebundene organische Reste aufweisen.

Weiterhin betrifft die DE 100 40 406 A1 ein modulares System auf Kieselsäureesterbasis zur strukturellen Festigung hochporöser Natursteine und zur Fertigung von Hinterfüllmassen für oberflächenparallele Risssysteme bzw. von Anböschmörteln zum Verschließen oberflächennaher Risse für die Restaurierung oder Konservierung von Natursteinen oder Natursteinmauerwerk. Dabei soll das System einen Steinfestiger auf Kieselsäurebasis sowie optional mineralische Füllstoffe bzw. Quarzsand und andere geeignete Sande sowie optional weitere Hilfs- und Wirkstoffe aufweisen. Zudem soll der Steinfestiger elastifizierende Weichsegmente und wenigstens einen Katalysator enthalten.

Aufbauend auf der "Stoffmischung zur Konservierung poröser Stoffe" , Patentanmeldung vom 2.7.2007, haben Versuche zu dem überraschenden Ergebnis geführt, daß diese Stoffmischung bei ausreichend hoher Konzentration - Feststoffabscheidung des Bindemittels zwischen 70 % und 15 %, vorzugsweise zwischen 70 % und 30 % - eine so hohe Bindekraft mit den Silikatoberflächen der mineralischen Zuschlagstoffe aufweisen, daß loser Sand zu einer Art Kunststein mit sehr guten mechanischen Eigenschaften verfestigt werden kann.

Die Variationsbreite der Eigenschaften ist so groß, dass die gefundene Mörtelkombination sich auch zum großflächigen Verputzen als Natursteinimitation und zum dünnflächigen Auftragen auf ein Trägermaterial als Paneel zum Einsatz im Innenund Außenbereich verwenden läßt.

Wie bei allen Mörteln ist die Qualität des Endproduktes nicht nur von den Eigenschaften und dem Mischungsverhältnis des Bindemittels sondern in starkem Maße von der Qualität und der optimierten Zusammensetzung der Zuschläge hinsichtlich Korngröße und Korngrößenverteilung abhängig. Diese Aussage trifft auch für die hier auf der Basis von Ormosilen als Bindemittel zum Einsatz kommenden Stoffmischungen zu.

Zur Herstellung des Mörtels kann auf den am Markt erhältlichen Abmischungen von Zuschlagstoffen, zurückgegriffen werden. Zusätzlich ist die erreichbare Festigkeit, der Reaktionsablauf und das optische Erscheinungsbild durch die Zusammensetzung der Stoffmischung in einer großen Bandbreite beeinflußbar.

Diese Aufgabe wird erfindungsgemäß dadurch gelöst, daß den entsprechenden Mischungen der Zuschlagstoffe ein Bindemittel zugegeben wird, dessen Mischung wenigstens einen Stoff aus der Gruppe der organisch modifizierten Siliziumdioxide insbesondere Organo(alkoxy)silane (Ormosile) enthält.

Gegenstand der vorliegenden Erfindung ist somit die Verwendung einer flüssigen Stoffmischung als Bindemittel zur Herstellung eines Mörtels, wobei diese Mischung wenigstens einen Stoff aus der Gruppe der organisch modifizierten Siliziumdioxide, insbesondere Organo(alkoxy)silane, enthält, wobei ein Stoff der Mischung ein organisch modifiziertes Siliziumdioxid ist, das wenigstens eine Epoxideinheit enthält und wobei ein Stoff der Mischung ein organisch modifiziertes Siliziumdioxid ist, das mindestens eine Aminfunktion enthält.

Durch unterschiedliche Kombinationen von Organo(alkoxy)silanen und durch Zugabe unterschiedlicher Mengen Alkohol (z.B. Ethanol und Methanol), vorzugsweise Ethanol läßt sich nicht nur die Menge an abgeschiedenem SiO2 beeinflussen und damit die Stabilität des ausreagierten Mörtels, sondern auch die Reaktionszeit steuern. Für das Hinterfüllen von Schalen und Abschuppungen ist dadurch unterschiedliches Fließverhalten gezielt realisierbar. Mit dem Abmischen des Mörtels beginnt die durch Hydrolyse und Polykondensation ablaufende Aushärtung des Bindemittels. Insbesondere bei großvolumigen Antragungen und Abgüssen ist die Aushärtung durch gezielte Temperatur und Feuchteführung überraschend gut steuerbar. Die erfindungsgemäße flüssige Stoffmischung wird als Bindemittel zur Herstellung eines Mörtels verwendet.

Die beiden Komponenten des aus Glycidylofypropyltrimethoxisilan (GLYMO) und Aminopropyltriethoxisilan (APTS) in alkoholischer Lösung bestehenden Wirkstoffsystems werden vor dem Einmischen in die mineralischen Zuschlagstoffe in stöchiometrischen Mengen zusammengeführt. Sie reagieren unter Wasserabspaltung zu einem Zwischenprodukt mit sechs randständigen Alkoxigruppen. Durch partielle Hydrolyse wird das Wirkstoffsystem aktiviert und kondensiert unter Wasser und Alkoholabspaltung zu einem Kieselgel, in dessen Struktur die organische Komponente zwischen Si-Atomen eingebunden ist und quasi als Abstandshalter zum Aufbau einer spannungsarmen Gelstruktur beträgt (Abbildung).

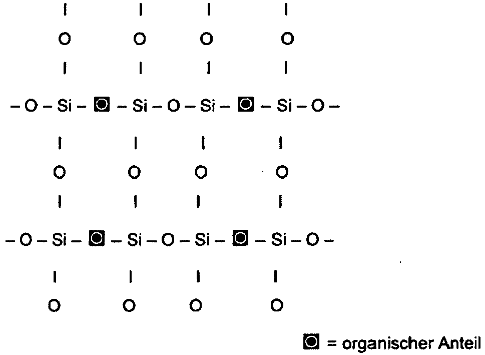

Das Bindemittel kann unterschiedlich zusammengesetzt sein, wobei die Mischung wenigstens einen Stoff aus der Gruppe der Organo(alkoxy)silane (Ormosile) enthält.

Hierbei sind die folgenden Mischungen besonders vorteilhaft:
a) Ein Stoff der Mischung ist ein Ormosil, das wenigstens eine Epoxideinheit enthält.
b) Ein Stoff der Mischung ist ein 3-Glycidyloxypropyltrimethoxysilan (GLYMO).
c) Ein Stoff der Mischung ist ein Ormosil, das mindestens eine Aminfunktion enthält.
d) Ein Stoff dieser Mischung ist ein Gammaaminopropyltrieethoxysilan (APTS).
e) Zwei Stoffe dieser Mischung bestehen aus den zuvor unter a) und c) gekennzeichneten Ormosilen.
f) Zwei Stoffe dieser Mischung bestehen aus den zuvor unter b) und d) gekennzeichneten Ormosilen.

Vorzugsweise wird als hydrophiles Lösungsmittel Alkohol mit ein bis sechs Kohlenstoffatomen insbesondere Ethanol oder Methanol zugegeben.

Das Masseverhältnis von dem Ormosil, das wenigstens eine Epoxideinheit enthält, zu dem Ormosil, das wenigstens eine Aminfunktion enthält, weist 1 : 0,2 bis 1 : 10 vorzugsweise 1 : 0,7 bis 1 : 1 ,7 und insbesondere ein Masseverhältnis von 1 : 1 ,07 auf.

Eine weitere Alternative besteht darin, dass neben dem Ormosil, das wenigstens eine Epoxideinheit aufweist und neben dem Ormosil, das mindestens eine Aminfunktion enthält, noch wenigstens ein weiteres Ormosil enthalten ist.

Hierbei ist das weitere Ormosil ein gamma-Methacryloxypropyltrimethoxysilan, ein Vinyltriethoxysilan, ein Dimethyldiethoxi-Silan und/oder ein Dimethyldimethoxi-Silan.

Von Bedeutung ist, dass der Mischung zur Initialisierung der Hydrolyse ein entsprechender Wasseranteil zugegeben werden kann.

### Weiteres Beispiel:

Einem mineralischen Gemisch unterschiedlicher Korngrößen wird eine Menge von 9 bis 20 Gewichtsprozent des flüssigen Bindemittels, das aus mindestens zwei Ormosilen plus einer Lösungsflüssigkeit vorzugsweise Ethanol besteht, zugegeben und gut vermischt. Hierbei ist das Masseverhältnis von dem Ormosil, das wenigstens eine Epoxideinheit enthält, zu dem Ormosil, das wenigstens eine Aminfunktion enthält, 1 : 1 ,07. Eine vorteilhafte Mischung besteht aus 2,4 g Ormosil, 2,3 g Ormosil 2 und 7 g Ethanol. Bei Zugabe von 7 g Ethanol wird im Mörtel eine Feststoffabscheidung von ca. 30 % erreicht. Wird der Mischung kein Ethanol beigegeben, wird eine Feststoffabscheidung von ca. 67 % erreicht.

## Patentansprüche

1. Verwendung einer flüssigen Stoffmischung als Bindemittel zur Herstellung eines Mörtels, wobei diese Mischung wenigstens einen Stoff aus der Gruppe der organisch modifizierten Siliziumdioxide, insbesondere Organo(alkoxy)silane, enthält, wobei ein Stoff der Mischung ein organisch modifiziertes Siliziumdioxid ist, das wenigstens eine Epoxideinheit enthält und wobei ein Stoff der Mischung ein organisch modifiziertes Siliziumdioxid ist, das mindestens eine Aminfunktion enthält.

2. Verwendung nach Anspruch 1, **dadurch gekennzeichnet, dass** ein Stoff der Mischung ein 3-Glycidyloxypropyltrimethoxysilan ist.

3. Verwendung nach Anspruch 1, **dadurch gekennzeichnet, dass** ein Stoff dieser Mischung ein Gamma-Aminopropyltrieethoxysilan ist.

4. Verwendung nach einem der Ansprüche 1 bis 3, **gekennzeichnet durch** Zugabe eines hydrophilen Lösungsmittels, vorzugsweise eines Alkohols mit einem bis sechs Kohlenstoffatomen.

5. Verwendung nach Anspruch 4, **dadurch gekennzeichnet, dass** der Alkohol Ethanol oder Methanol ist.

6. Verwendung nach einem der vorangehenden Ansprüche, **dadurch gekennzeichnet, dass** das Massenverhältnis von dem organisch modifizierten Siliziumdioxid, das wenigstens eine Epoxideinheit enthält, zu dem organisch modifizierten Siliziumdioxid, das wenigstens eine Aminfunktion enthält, 1 : 0,2 bis 1 : 10, vorzugsweise 1 : 0,7 bis 1 : 1,7, beträgt und insbesondere 1 : 1,07 ist.

7. Verwendung nach einem der vorangehenden Ansprüche, **dadurch gekennzeichnet, dass** neben dem organisch modifizierten Siliziumdioxid, das wenigstens eine Epoxideinheit aufweist, und neben dem organisch modifizierten Siliziumdioxid, das mindestens eine Aminfunktion enthält, noch wenigstens ein weiteres organisch modifiziertes Siliziumdioxid enthalten ist.

8. Verwendung nach Anspruch 7, **dadurch gekennzeichnet, dass** das der Mischung beigegebene weitere organisch modifizierte Siliziumdioxid ein gamma-Methacryloxypropyltrimethoxysilan ist.

9. Verwendung nach Anspruch 7, **dadurch gekennzeichnet, dass** das der Mischung beigegebene weitere organisch modifizierte Siliziumdioxid ein Vinyltriethoxysilan ist.

10. Verwendung nach Anspruch 7, **dadurch gekennzeichnet, dass** das der Mischung beigegebene weitere organisch modifizierte Siliziumdioxid ein Dimethyldiethoxisilan ist.

11. Verwendung nach Anspruch 7, **dadurch gekennzeichnet, dass** das der Mischung beigegebene weitere organisch modifizierte Siliziumdioxid ein Dimethyldimethoxisilan ist.

12. Verwendung nach einem der vorangehenden Ansprüche, **dadurch gekennzeichnet, dass** der Mischung zur Initialisierung der Hydrolyse ein entsprechender Wasseranteil zugegeben ist.

## Claims

1. Use of a liquid substance mixture as a binding means for producing a mortar, wherein this mixture contains at least one substance from the group of organically modified silicon dioxides, in particular organo-alkoxysilanes, wherein one substance of the mixture is an organically modified silicon dioxide which contains at least one epoxy unit and wherein one substance of the mixture is an organically modified silicon dioxide containing at least one amine function.

2. The use according to claim 1, **characterized in that** one substance of the mixture is a 3-glycidyloxypropyltrimethoxysilane.

3. The use according to claim 1, **characterized in that** one substance of this mixture is a gammaaminopropyltriethoxysilane.

4. The use according to one of claims 1 to 3, **characterized by** the addition of a hydrophilic solvent, preferably an alcohol with one to six carbon atoms.

5. The use according to claim 4, **characterized in that** the alcohol is ethanol or methanol.

6. The use according to one of the preceding claims, **characterized in that** the mass ratio of the organically modified silicon dioxide, which contains at least one epoxy unit, to the organically modified silicon dioxide, which contains at least one amine function, is 1:0.2 to 1:10, preferably 1:0.7 to 1:1.7 and in particular 1:1.07.

7. The use according to one of the preceding claims, **characterized in that** apart from the organically modified silicon dioxide, which exhibits at least one epoxy unit, and apart from the organically modified silicon dioxide, which contains at least one amine function, at least one further organically modified silicon dioxide is also contained.

8. The use according to claim 7, **characterized in that** the further organically modified silicon dioxide added to the mixture is a gamma-methacryloxypropyltrimethoxysilane.

9. The use according to claim 7, **characterized in that** the further organically modified silicon dioxide added to the mixture is a vinyl triethoxysilane.

10. The use according to claim 7, **characterized in that** the further organically modified silicon dioxide added to the mixture is a dimethyldiethoxysilane.

11. The use according to claim 7, **characterized in that** the further organically modified silicon dioxide added to the mixture is a dimethyldimethoxysilane.

12. The use according to one of the preceding claims, **characterized in that** a corresponding fraction of water is added to the mixture to initialize hydrolysis.

## Revendications

1. Utilisation d'un mélange liquide de substances comme agent liant pour la production d'un mortier, ledit mélange contenant au moins une substance du groupe des dioxydes de silicium organiquement modifiés, notamment de l'organo(alkoxy)silane, une substance du mélange étant un dioxyde de silicium organiquement modifié qui contient au moins une unité époxy et une substance du mélange étant un dioxyde de silicium organiquement modifié qui contient au moins une fonction amine.

2. Utilisation selon la revendication 1, **caractérisée en ce qu'**une substance du mélange est un (3-glycidyloxypropyl)triméthoxysilane.

3. Utilisation selon la revendication 1, **caractérisée en ce qu'**une substance du mélange est un gamma-aminopropyltriethoxysilane.

4. Utilisation selon l'une quelconque des revendications 1 à 3, **caractérisée par** l'ajout d'un solvant hydrophile, de préférence d'un alcool avec de un à six atomes de carbone.

5. Utilisation selon la revendication 4, **caractérisée en ce que** l'alcool est de l'éthanol et du méthanol.

6. Utilisation selon l'une quelconque des revendications précédentes, **caractérisée en ce que** le rapport en masse du dioxyde de silicium organiquement modifié qui contient au moins une unité époxy au dioxyde de silicium organiquement modifié qui contient au moins une fonction amine s'élève à de 1 : 0,2 à 1 : 10, de préférence de 1 : 0,7 à 1 : 1,7 et est notamment de 1 : 1,07.

7. Utilisation selon l'une quelconque des revendications précédentes, **caractérisée en ce que** parallèlement au dioxyde de silicium organiquement modifié qui contient au moins une unité époxy et au dioxyde de silicium organiquement modifié qui contient au moins une fonction amine, au moins un dioxyde de silicium organiquement modifié supplémentaire est contenu.

8. Utilisation selon la revendication 7, **caractérisée en ce que** le dioxyde de silicium organiquement modifié supplémentaire ajouté au mélange est un gamma-méthacryloxypropyltrimethoxysilane.

9. Utilisation selon la revendication 7, **caractérisée en ce que** le dioxyde de silicium organiquement modifié supplémentaire ajouté au mélange est un vinyltriethoxysilane.

10. Utilisation selon la revendication 7, **caractérisée en ce que** le dioxyde de silicium organiquement modifié supplémentaire ajouté au mélange est un diméthyldiethoxisilane.

11. Utilisation selon la revendication 7, **caractérisée en ce que** le dioxyde de silicium organiquement modifié supplémentaire ajouté au mélange est un diméthyldimethoxisilane.

12. Utilisation selon l'une quelconque des revendications précédentes, **caractérisée en ce que** pour initialiser l'hydrolyse, il est ajouté au mélange une part correspondante en eau.
